# FASCICULE DE BREVET EUROPEEN

(11) **EP 2 698 775 B1**
(45) Date de publication et mention de la délivrance du brevet: **28.12.2016**
(21) Numéro de dépôt: 13306129.1
(22) Date de dépôt: 07.08.2013
(51) Int. Cl.: G08B 15/00

(54) **Procédé et dispositif de simulation de présence autonome**
Verfahren und Vorrichtung zur unabhängigen Präsenzsimulation
Method and standalone device for simulating presence

(30) Priorité: 17.08.2012 FR 1257858
(43) Date de publication de la demande: 19.02.2014
(73) Titulaire: HAGER CONTROLS (Société par Actions Simplifiée), 67700 Saverne (FR)
(72) Inventeur: Del Bianco, Antonio, 67500 Batzendorf (FR); Scheffer, Jérôme, 67120 Ergersheim (FR); Akakpo, Aurélien, 67000 Strasbourg (FR)
(74) Mandataire: Nuss, Laurent

(56) Documents cités:
- EP-A1- 2 431 956
- DE-U1- 9 421 031
- FR-A1- 2 618 233
- US-A1- 2001 052 862

## Description

La présente invention relève du domaine des équipements électriques pour l'installation électrique d'un bâtiment, et a pour objet un procédé de simulation de présence ainsi qu'un dispositif luminaire particulier.

Pour dissuader des fraudeurs, il est particulièrement pertinent de simuler une présence dans un bâtiment, en mettant en marche des équipements électriques à des moments choisis. Des applications classiques de ce genre permettent de programmer un fonctionnement temporaire de luminaires, volets roulants, bandes sonores, etc. Différentes scènes sont donc enchaînées, s'étalant chacune sur une courte période de temps, notamment 30 minutes, chaque scène consistant essentiellement en une combinaison d'état de fonctionnement de chacun des équipements électriques sous contrôle. Il est donc important de définir les différentes scènes successives pour que leur enchaînement soit représentatif d'une présence et dissuade effectivement les fraudeurs. La séquence de scènes est préférentiellement cyclique, de sorte à reproduire un cycle correspondant environ à une journée de 24 heures.

Dans ce domaine, et afin d'éviter que la stricte répétition d'une séquence de scènes permette aux fraudeurs d'identifier que les équipements électriques sont sous le contrôle d'un simulateur de présence, FR 2 587 821 propose d'intégrer des variables aléatoires dans la définition des périodes de temps des séquences.

Il est naturellement nécessaire de réaliser un paramétrage d'un simulateur de présence, ce qui revient à définir, pour chaque période de temps successive du cycle, la scène qui sera jouée, à savoir l'état respectif de chaque appareil électrique contrôlé. Il est possible de paramétrer directement l'état de chaque appareil pour chaque période de temps, ce qui peut être fastidieux, mais il est aussi possible, comme dans FR 2 618 233, de mémoriser l'utilisation effective des appareils faite sur une période choisie. Ce document antérieur propose ainsi un procédé présentant un mode de paramétrage, au cours duquel il enregistre l'exploitation des différents appareils au cours d'un cycle, un mode normal, au cours duquel les appareils électriques sont librement utilisés, puis un mode simulation, au cours duquel le cycle paramétré est rejoué.

Un des inconvénients majeurs des paramétrages actuels est qu'il faut généralement placer volontairement l'appareil de contrôle dans un mode de réglage, et que cela est donc bien souvent fait uniquement lors de l'installation. L'utilisation type des locaux peut toutefois changer au fil des années, par exemple si une nouvelle pièce est aménagée dans le local ou si son occupation réelle devient de plus en plus rare, et le cycle mémorisé peut alors en être tellement différent qu'un fraudeur pourra aisément identifier qu'il s'agit d'un simulateur de présence, obtenant même par là la confirmation que les locaux sont inoccupés. La sécurité n'est donc plus assurée.

La présente invention a pour but de pallier au moins une partie et préférentiellement tous les inconvénients ci-dessus, et vise notamment à proposer un paramétrage de simulateur de présence qui soit facile pour l'utilisateur, et qui représente aussi correctement l'utilisation courante des locaux. Ce résultat est obtenu en réalisant le paramétrage pendant la période d'utilisation de l'appareil sur la base d'une détection de mouvement et/ou présence, ainsi qu'en mettant en oeuvre, de façon régulière, des étapes de rafraichissement du décompte des détections.

A cet effet, l'invention a pour objet un procédé de simulation de présence pour un local, comprenant, d'une part, une étape consistant essentiellement à piloter au moins un appareil électrique, en enchaînant des scènes simulant son actionnement par un utilisateur et s'étalant chacune sur une période de temps, l'enchaînement des scènes se répétant préférentiellement de façon cyclique, et, d'autre part, une étape préalable consistant essentiellement à paramétrer les scènes, lors de laquelle l'état souhaité de l'au moins un appareil électrique piloté est défini pour chaque période de temps successive.

Ce procédé est caractérisé en ce que l'étape préalable comprend, en outre, deux étapes utiles pour paramétrer, à savoir, d'une part, comptabiliser des détections de présence et/ou mouvement dans au moins une zone du local pour chaque période de temps, en quantifiant un indice de détection, et, d'autre part, décider de l'état du au moins un appareil pour chaque période de temps en tenant compte des indices de détection calculés, et en outre, une étape consistant essentiellement à rafraîchir le décompte des détections, lors de laquelle l'indice de détection pour au moins une période de temps est diminué.

En outre, l'invention vise aussi à simplifier un dispositif mettant en oeuvre une simulation de présence, ce qui, entre autres, est obtenu sous la forme d'un appareil électrique, type luminaire comprenant un détecteur de présence et/ou mouvement pour sa mise en marche, l'indice de détection étant défini à partir des détections effectuées par ledit détecteur.

L'invention a donc aussi pour objet un dispositif luminaire mettant en oeuvre le procédé de l'invention comprenant une source de lumière, un détecteur de mouvement et/ou présence, une unité de traitement numérique, un commutateur piloté pour mettre en marche la source de lumière en cas de détection.

Ce dispositif est caractérisé en ce que
il comprend, en outre, une mémoire, dans laquelle sont mémorisés un programme de simulation de présence ainsi que des indices de détection pour différentes périodes de temps.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

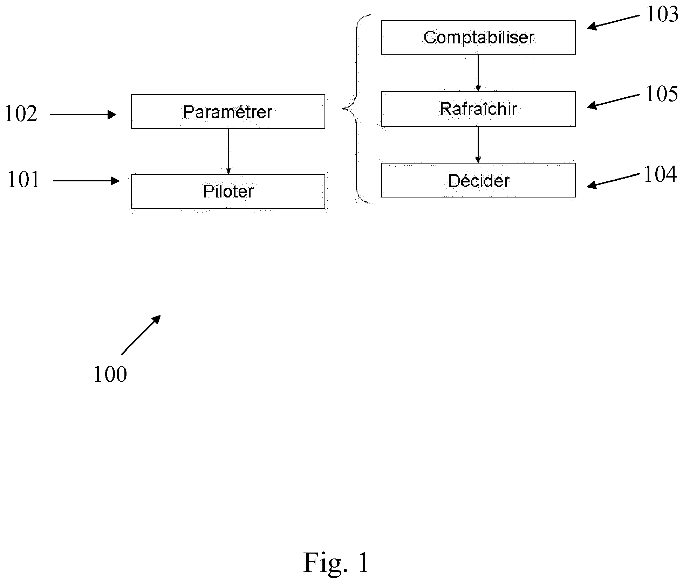

- la figure 1 représente un procédé selon l'invention ;

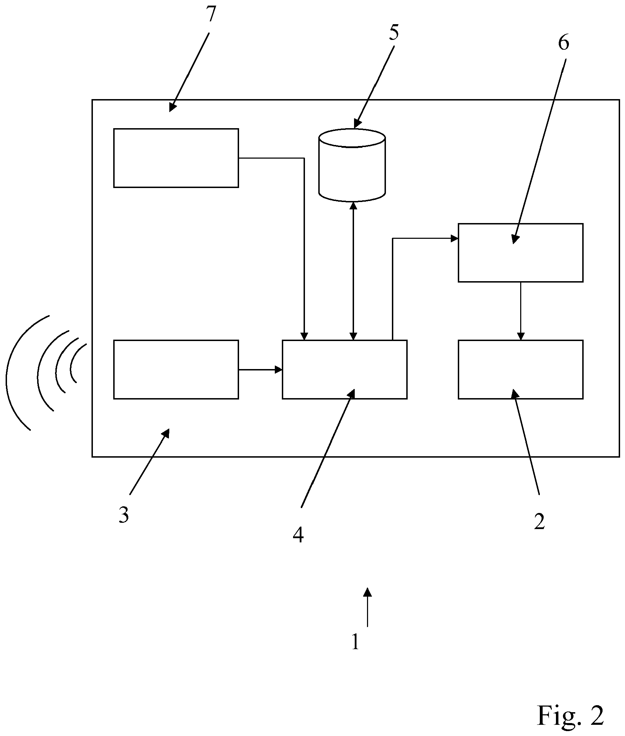

- la figure 2 représente un dispositif selon l'invention ;
- la figure 3 montre un indice de détection, avant et après rafraichissement, pour un cycle de 24 heures ;
- les figures 4 et 5 montrent l'état de fonctionnement d'un appareil électrique, correspondant à l'indice de la figure 3, respectivement avant et après rafraichissement.

L'invention a donc tout d'abord comme objet un procédé de simulation 100 de présence pour un local, comprenant, d'une part, une étape consistant essentiellement à piloter 101 au moins un appareil électrique, en enchaînant des scènes simulant son actionnement par un utilisateur et s'étalant chacune sur une période de temps, l'enchaînement des scènes se répétant préférentiellement de façon cyclique, et, d'autre part, une étape consistant essentiellement à paramétrer 102 les scènes, lors de laquelle l'état souhaité de l'au moins un appareil électrique piloté est défini pour chaque période de temps successive.

Ce procédé de simulation 100 peut donc être mis en oeuvre dans une installation domotique, et permet, temporairement, de contrôler des appareils électriques, en particulier des luminaires, de sorte à simuler une présence dans des locaux. D'autres appareils électriques du réseau domotique, extérieurs ou intérieurs au bâtiment, peuvent être pilotés : volets roulants, téléviseur, etc. Un luminaire piloté peut donc se trouver dans le local, dans une pièce intérieure, voire à l'extérieur. Le procédé peut aussi ne contrôler qu'un seul appareil, comme un luminaire alors contrôlé conformément à ce procédé de simulation 100.

Toutefois, un dispositif mettant en oeuvre l'invention ne fait pas nécessairement partie d'une installation domotique. Un tel procédé de simulation 100 peut en effet être mis en oeuvre par un appareil électrique autonome, ce dernier pouvant ainsi avoir, d'une part, un mode de fonctionnement normal, et, d'autre part, un mode de simulation de présence. Dans ce cas, la simulation de présence revient donc à ne piloter 101 que cet appareil. Comme décrit plus loin, un tel procédé de simulation 100 peut donc être mis en oeuvre par un réseau domotique, plusieurs appareils électriques étant alors pilotés et utilisés pour chaque scène, ou pour un appareil autonome.

Une scène pour la simulation de présence consiste essentiellement en un état de fonctionnement de l'ensemble des différents appareils électriques pilotés : extinction, mise en marche, intensité de fonctionnement pour un luminaire, volume pour une bande son, etc. Simuler une présence se fait donc en enchaînant des scènes successives, chacune s'étalant sur une période de temps prédéfinie, comme une demi-heure ou une heure. Bien entendu, des variations de ces périodes de temps peuvent être aménagées autour d'une valeur moyenne. Les scènes s'enchaînent séquentiellement au cours d'un cycle durant préférentiellement environ 24 heures, bien que d'autres cycles plus longs puissent aussi être envisagés.

Il est naturellement nécessaire, préalablement au pilotage 101 du ou des appareils, de paramétrer 102 la simulation, c'est-à-dire de définir l'état de fonctionnement des différents appareils électriques souhaité pour chacune des scènes qui seront ensuite successivement utilisées pour piloter 101 les appareils électriques au cours de la simulation de présence.

Ainsi, selon l'invention, le procédé comprend, en outre, deux étapes utiles pour paramétrer 102, à savoir, d'une part, comptabiliser 103 des détections de présence et/ou mouvement dans au moins une zone du local pour chaque période de temps, en quantifiant un indice de détection, et, d'autre part, décider 104 de l'état du au moins un appareil pour chaque période de temps en tenant compte des détections comptabilisées 103,
le procédé comprenant, en outre, une étape consistant essentiellement à rafraîchir 105 le décompte des détections, lors de laquelle l'indice de détection pour au moins une période de temps est diminué.

Une simulation de présence efficace joue des scènes dont l'enchaînement représente une utilisation normale des différents appareils électriques, et il est donc important, dans l'étape de paramétrage 102, de détecter quelle est l'utilisation normale des occupants du local. L'invention propose donc d'identifier l'utilisation normale en détectant la présence d'un utilisateur dans au moins une zone particulière : un couloir, une pièce, une zone de passage, préférentiellement dans l'environnement immédiat du au moins un appareil électrique piloté. La détection de présence et/ou mouvement peut se faire dans une seule zone, en particulier si le procédé ne contrôle qu'un seul appareil électrique, ou dans plusieurs zones, voire même à l'extérieur du local, les zones de détection étant toutefois préférentiellement à proximité des appareils électriques pilotés. Comme il sera encore décrit plus loin, cette détection peut aussi avoir pour effet direct, en utilisation normale, hors du pilotage 101 pour simuler une présence, de mettre en marche au moins un appareil électrique : par exemple un combiné détecteur-luminaire, où la détection met en marche un luminaire formant l'appareil électrique piloté.

Comptabiliser 103 revient donc essentiellement à quantifier les détections pour chaque tranche horaire du cycle, et, préférentiellement, à incrémenter un indice de détection mémorisé, propre à la zone surveillée ainsi qu'à chaque période de temps, représentatif du nombre de fois qu'un mouvement a été détecté et/ou qu'une présence a été détectée pendant cette plage horaire.

Il pourra éventuellement être tenu compte de la durée de la détection : l'indice de détection pourra être d'autant plus augmenté que la présence est détectée pendant longtemps, ce qui permet de tenir compte de la durée de la présence détectée pour ne pas affecter la même importance à un bref passage qu'à une présence prolongée.

Dans le cas particulier d'un appareil électrique sous la forme de luminaire, il est courant que la détection déclenche une mise en marche de l'éclairage pendant une durée prédéfinie. Dans ce cas, une détection ayant lieu au cours de cette période de mise en marche aura généralement pour effet de réinitialiser la période de mise en marche, et ainsi de suite. Bien entendu, une détection survenant alors que le luminaire est allumé, et donc pendant la durée prédéfinie suite à une précédente détection, générera elle aussi une incrémentation de l'indice de détection.

Pour comptabiliser 103, il suffit donc essentiellement de répertorier le nombre de fois qu'une présence et/ou mouvement à été détectée et/ou détecté, voire aussi sa durée, pour chacune des différentes plages temporaires au cours desquelles une scène sera jouée lors de l'étape de pilotage 101 pour simulation de présence, pendant laquelle le au moins un appareil électrique est piloté 101. Bien entendu, le calcul de l'indice de détection peut aussi tenir compte du nombre de cycles au cours desquels les détections sont relevées, ce qui permet d'obtenir un indice de détection représentatif d'une occupation moyenne, sur plusieurs cycles, de la plage horaire.

Ainsi, à chaque détection de mouvement et/ou présence, que ce soit par exemple par détection ultrason ou par infrarouge, un indice de détection, représentatif de l'occupation d'une zone pendant une tranche horaire, est incrémenté.

Il peut être avantageux de comptabiliser 103 les détections dans plusieurs zones simultanément, la position des différents appareils électriques dans telle ou telle zone étant prise en compte pour décider 104 de l'état de fonctionnement de chaque appareil lors de la simulation de présence. Il existe alors une pluralité d'indices de détection pour chaque période de temps, chacun étant associé à une zone de détection.

Comme encore décrit plus loin, le paramétrage 102 peut avoir lieu tant que le pilotage 101 pour la simulation de présence n'est pas enclenché. Il est donc possible de réaliser le paramétrage 102 de la simulation sans forcer le passage à un mode de réglage. Le paramétrage 102 peut donc se faire quasiment en permanence, sans intervention de l'utilisateur ou d'un installateur mais tout au long du fonctionnement normal de l'appareil. De façon générale, avec ce procédé, le au moins un appareil électrique est donc soit utilisé normalement, simultanément au paramétrage 102, soit piloté 101 pour simuler une présence.

Sur la base des indices de détection calculés, il est ensuite décidé 104, pour chaque période de temps, de l'état de fonctionnement de l'au moins un appareil électrique piloté, ce qui revient donc à définir la scène associée à cette période de temps.

Préférentiellement, l'état de fonctionnement est décidé 104 de la façon suivante. Les indices de détection, relatif chacun à une tranche horaire, voire aussi à une zone de détection, sont comparés entre eux, et les tranches horaires pour lesquelles les indices de détection sont les plus élevés sont identifiées. On choisira ensuite de mettre en marche l'appareil électrique au cours de la tranche horaire pour laquelle l'indice de détection est maximum. Bien entendu, partant d'un classement par indice de détection décroissant, il est possible de retenir non pas uniquement la première tranche horaire, mais les deux, trois, voire plus, premières tranches horaires, pour la mise en marche de l'appareil. L'état de fonctionnement est bien sûr ici celui qui simule une présence, et la mise en marche n'est qu'un cas particulier. L'étape de décision 104 repose donc sur une comparaison relative des indices de détection.

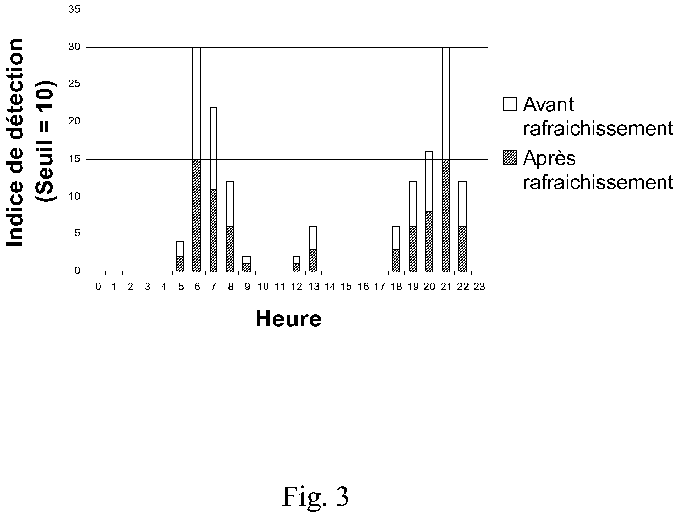

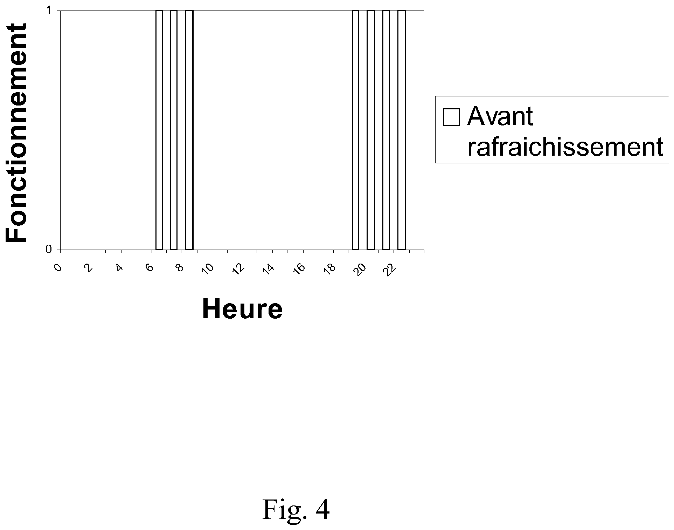

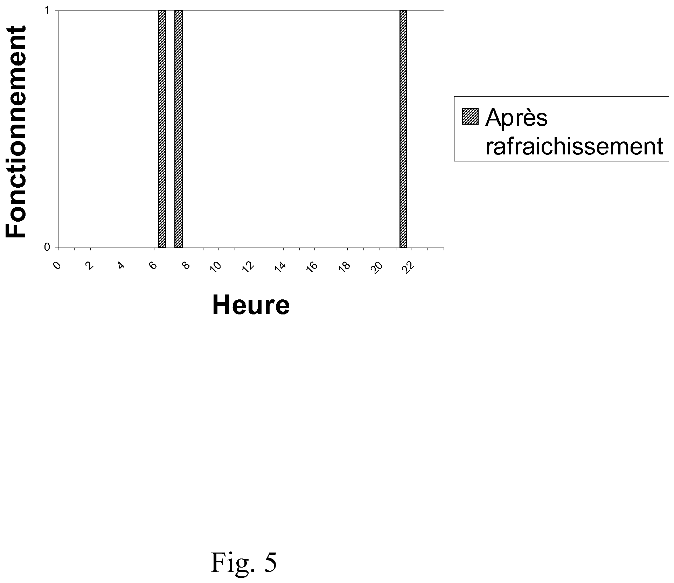

Alternativement, décider 104 de l'état de fonctionnement de l'au moins un appareil contrôlé, sur la base de l'indice de détection, peut consister à choisir de mettre en marche l'au moins un appareil électrique si l'indice de détection est au-dessus d'un seuil prédéfini, ou son extinction si l'indice de détection est au-dessous d'un seuil prédéfini. La figure 3 montre des valeurs d'indice de détection, les figures 4 et 5 montrant le résultat de l'étape de décision 104, en termes de fonctionnement horaire d'un appareil : en fonctionnement si l'indice est supérieur à 10 et éteint dans le cas contraire. La détection pouvant aussi se faire pour plusieurs zones, l'étape de décision 104 peut se faire en tenant compte de la localisation de chaque appareil électrique par rapport aux zones de détection. Le seuil peut aussi dépendre de la durée de l'étape de paramétrage, de sorte à éviter qu'au bout de quelques cycles de détection, tous les indices soient au-dessus du seuil.

Afin d'éviter, au bout d'un temps très long d'utilisation, d'atteindre un paramétrage qui ne corresponde plus à l'utilisation actuelle des locaux, il est proposé de régulièrement modifier le résultat de la comptabilisation 103, par le biais d'une étape de rafraîchissement 105, de sorte à réduire sans toutefois annuler, dans le calcul, l'impact des détections antérieures. Ce faisant, il est aussi possible d'éviter que des changements récents dans l'utilisation des locaux, par exemple l'aménagement d'une nouvelle pièce ou le contraire, ne soit finalement pris en compte qu'au bout d'un temps très long, rendant clairement la simulation de présence non-conforme à la réalité. Cette étape de rafraîchissement 105 évite aussi que la saturation de la mémoire utilisée pour comptabiliser 103 n'amène à des simulations incohérentes. Lors de cette étape, une nouvelle valeur plus faible est affectée à au moins un indice de détection. Le rafraîchissement 105 peut ainsi consister à impacter les indices de détection de différentes façons, comme décrit ci-dessous.

Dans une première réalisation et selon une caractéristique additionnelle possible, permettant d'homogénéiser la modification apportée à l'indice de détection pour chaque tranche horaire, voire pour chaque zone de détection, rafraîchir 105 consiste essentiellement à diviser de façon homogène les différents indices de détection, de sorte à conserver un paramétrage représentatif des détections effectuées jusqu'alors, en particulier à diviser de la même façon, par exemple par deux, chacun des indices de détection, propre à une tranche horaire, voire aussi à une zone de détection. En divisant les différents indices de détection par le même facteur, on réduit, sans toutefois l'annuler, l'impact des détections passées, tout en évitant d'obtenir un paramétrage trop peu représentatif de l'utilisation passée.

Dans une autre réalisation, les indices de détection élevés sont plus réduits que les indices de détection faibles, ce qui permet, par exemple, d'alterner, lors de la simulation, la mise en marche pour deux tranches horaires qui ont chacune des indices de détection proches et élevés, les détections pour l'une d'elles étant cependant légèrement mois fréquentes que celles l'autre.

Dans encore une autre réalisation, seuls les indices de détection les plus élevés sont réduits, les indices de détection faibles n'étant pas modifiés.

Dans encore une autre réalisation, une même valeur est affectée à tous les indices de détection : par exemple une valeur nulle.

La figure 3 montre un indice de détection calculé pour différentes plages horaires d'un cycle de 24 heures. Le rafraichissement 105 consiste dans le cas illustré dans cette figure à diviser par deux les valeurs d'indice pour chaque plage horaire, le graphique de la figure montrant simultanément les indices de détections avant et après le rafraichissement 105. Si l'état de fonctionnement est décidé 104 en comparant les indices de détection entre eux, la division par le même facteur se fera normalement sans impacter les états décidés, puisque les écarts des indices de détection ne sont pas modifiés. Les figures 4 et 5 illustrent l'état de fonctionnement d'un appareil, dans le cas où, avec les valeurs de l'indice de détection représentées à la figure 3, l'appareil est mis en fonctionnement si l'indice est supérieur à 10. Ces figures montrent que la mise en marche est légèrement différente avant et après le rafraichissement, puisque, après rafraichissement 105, la valeur de l'indice de détection passe sous le seuil de mise en marche.

Selon une caractéristique additionnelle possible, comptabiliser 103 est effectué en permanence, à savoir tant que le pilotage 101 n'est pas en cours, rafraîchir 105 étant effectué à des instants choisis. Bien entendu, il n'est pas nécessaire de comptabiliser 103 lorsque la simulation de présence est en cours grâce au pilotage 101 des appareils, puisque cela correspond à des périodes d'absence. Par contre, comme la détection peut fonctionner alors que les appareils électriques ne sont pas pilotés 104 pour la simulation de présence, il est possible de comptabiliser 103 les détections pendant toute cette période, sans réception préalable d'une instruction de l'utilisateur de passer dans un mode de réglage. Paramétrer 102 la simulation peut donc se faire quasiment en permanence et sans aucune intervention de l'utilisateur, et l'intégration d'une étape de rafraîchissement 105 permet entre autres d'obtenir une séquence de scènes qui soit représentative des récentes évolutions de l'utilisation. Concernant les instants choisis pour rafraîchir 105, plusieurs alternatives possibles sont décrites ci-dessous.

Rafraîchir 105 peut par exemple être mis en oeuvre dès lors que le nombre d'indices au dessus d'un seuil de mise en marche devient supérieur à un nombre choisi.

Rafraîchir 105 peut aussi être réalisé périodiquement, à des intervalles de temps prédéfinis : par exemple toutes les semaines, tous les mois, aux changements d'heure été / heure hiver, ou de façon trimestrielle pour tenir compte des saisons.

L'étape de rafraîchissement 105 peut aussi être mise en oeuvre s'il est constaté que la ou les tranches horaires pour lesquelles il est décidé de mettre en marche un appareil électrique pour simuler une présence, restent les mêmes sur une période de temps prédéfinie, par exemple un mois ou quelques mois.

Le rafraîchissement 105 peut aussi avoir lieu en surveillant l'évolution dans le temps des indices de détection. Tant que l'utilisation des locaux est la même, les indices de détection, en dehors des étapes de rafraîchissement 105 bien entendu, évoluent a priori sensiblement de façon stable, et c'est à l'occasion des changements d'habitude que les vitesses d'incrémentation des indices de détection vont changer. Si beaucoup de mouvements sont détectés dans une première zone, son indice de détection sera incrémenté plus rapidement que celui d'une deuxième zone, moins fréquentée. A l'occasion d'un changement d'habitude, il se peut alors que la situation s'inverse et que la deuxième plage horaire devienne la plus fréquentée, au détriment de la première. Les vitesses d'incrémentation auront donc changé. Pourtant, dans le cas où aucun rafraichissement 105 n'est prévu, si l'écart entre les indices de détection était élevé avant le changement d'habitude, il faudrait attendre longtemps avant que l'indice de détection le plus faible égalise l'autre. Pour éviter cette période d'attente, il peut donc être utile de procéder à une étape de rafraîchissement 105.

Dans d'autres réalisations, et selon une caractéristique avantageuse possible, rafraîchir 105 se fait lorsque la valeur de l'indice de détection pour l'une des périodes de temps a atteint un seuil. Dans des modes de réalisation particuliers déjà évoqués, le seuil déclenchant le rafraîchissement 105 dépend des capacités de mémorisation d'une mémoire 5 dans laquelle sont enregistrés et codés les indices de détection, pour chaque période de temps voire aussi pour chaque zone de détection. Comptabiliser 103 utilise donc une mémoire 5, dans laquelle sont mémorisés les résultats des détections. Rafraîchir 105 le décompte évite donc, comme il a été dit, d'obtenir des simulations incohérentes à cause d'une remise à zéro de l'indice de détection, c'est-à-dire du comptage des détections.

Ainsi, lorsque l'un des indices de détection atteint un seuil défini compte tenu de la capacité de la mémoire 5 utilisée pour mémoriser et incrémenter progressivement les indices de détections, l'étape de rafraîchissement 105 est mise en oeuvre, ce qui permet de reprendre le cours normal de l'incrémentation, et donc d'avoir une incrémentation possible en permanence, sans être gêné par la limitation du codage de l'indice de détection, et donc de conserver en permanence un paramétrage de la simulation qui soit instantanément représentatif d'une utilisation courante. Le seuil peut aussi être beaucoup plus faible que celui fixé dans l'unique but d'éviter d'être gêné par cette limite de codage, ce qui permettra que le rafraîchissement 105 soit plus fréquent, et donc de tenir plus fréquemment compte des changements d'habitude.

L'invention a aussi pour objet un appareil électrique mettant en oeuvre le procédé de simulation 100 tel que décrit plus haut, et en particulier un dispositif luminaire 1 comprenant une source de lumière 2, un détecteur 3 de mouvement et/ou présence, une unité de traitement 4 numérique, un commutateur 6 piloté pour mettre en marche la source de lumière 2 en cas de détection, en particulier par l'intermédiaire de l'unité de traitement 4 numérique recevant une information de détection du détecteur 3 et pilotant en conséquence le commutateur 6.

Comme il a déjà été mentionné plus haut, le détecteur 3 peut fonctionner à ultrason ou infrarouge, l'unité de traitement 4 prend préférentiellement la forme d'un microprocesseur.

Selon l'invention, le dispositif luminaire 1 comprend, en outre, une mémoire 5, dans laquelle sont mémorisés un programme de simulation de présence ainsi que des indices de détection pour différentes périodes de temps, ou tranches horaires prédéfinies tels que décrits plus haut. La mémoire 5 et l'unité de traitement 4 peuvent par ailleurs être formées par un seul et même composant, des cases mémoire d'une unité de traitement 4 sous forme de microprocesseur formant la mémoire 5. Le programme de simulation de présence comprend le procédé de simulation 100 tel que décrit ci-dessus, et le dispositif luminaire 1 est contrôlé conformément à ce procédé.

Une horloge interne est aussi nécessaire pour identifier les différentes plages horaires pour lesquelles les indicateurs de détections sont calculés et les différentes scènes seront rappelées lors du pilotage 101 pour simuler une présence. L'appareil électrique, dispositif luminaire 1, peut donc être autonome et ne nécessiter qu'une alimentation de puissance, son fonctionnement en temps normal dépendant des détections, et, en pilotage 101, des états décidés suite aux détections ayant servi au calcul des indices de détection. Un tel appareil électrique autonome n'est donc pas piloté par une information externe provenant par exemple d'un réseau domotique ou d'un bus, mais son état ne dépend que de sa propre logique de fonctionnement, tenant essentiellement compte des seules détections dans l'environnement.

Selon une caractéristique additionnelle possible du dispositif luminaire 1, il comprend un récepteur de signal 7, pour recevoir une instruction d'exécution de l'étape de pilotage 101 d'un programme de simulation de présence, en particulier le procédé de simulation 100 tel que décrit ci-dessus. Un tel récepteur 7 peut prendre de multiples formes : bouton à actionner pour un contrôle manuel, récepteur sans fil pour un contrôle par télécommande, connecteur à un réseau domotique pour un contrôle filaire à distance depuis une centrale de gestion, etc. Lorsque le signal correspondant est reçu par le récepteur de signal 7, la simulation de présence est mise en oeuvre, ce qui correspond en particulier à l'étape de pilotage 101. A réception d'un autre signal, le mode de fonctionnement normal est à nouveau utilisé, le détecteur 3 permettant de mettre en marche la source de lumière, notamment simultanément à l'étape de paramétrage 102.

Ainsi, dans des modes de réalisation particuliers, le récepteur de signal 7 est une borne de réception sans fil, en particulier le détecteur 3 de présence et/ou mouvements lui-même.

Enfin, selon une caractéristique additionnelle possible du dispositif luminaire 1, il prend la forme d'un appareillage électrique pour montage encastré dans un mur, du type spot encastré à détection, la simulation de présence associée étant ainsi paramétrée en fonction de la détection de mouvement et/ou présence directement dans l'environnement de la source de lumière. Un tel appareillage électrique englobe donc un détecteur 3, une source de lumière qui se met en marche dès la détection d'un mouvement et/ou une d'une présence, cette détection étant utilisée pour quantifier les indices de détection, utilisés ultérieurement pour décider 104 de l'état de cette même source de lumière lors du pilotage pour la simulation de présence. Un tel dispositif luminaire 1 présente donc un fonctionnement en autonomie, sans qu'il soit nécessaire à l'utilisateur d'interférer sur le paramétrage 102 de la simulation de présence.

Dans des réalisations plus développées, le dispositif luminaire 1 prend la forme d'une installation luminaire comprenant plusieurs sources de lumière 2, plusieurs détecteurs 3, au moins une unité de traitement 4, plusieurs commutateurs 6 pilotés, chacun d'eux étant associé à l'une des sources de lumière 2. Les différents détecteurs 3 surveillent chacun une zone, éventuellement une zone propre à chaque fois à l'une des sources de lumière 2. Il peut donc être envisagé que l'installation luminaire comprenne plusieurs équipements combinant une source de lumière 2 et son détecteur 3 associé, le détecteur 3 pouvant mettre en marche ladite source de lumière 2, grâce à un commutateur 6 piloté. L'unité de traitement 4 peut être centrale, par exemple, installée dans une interface de contrôle d'une installation domotique.

Bien entendu, l'invention n'est pas limitée au mode de réalisation décrit et représenté aux dessins annexés. Des modifications restent possibles, notamment du point de vue de la constitution des divers éléments, par combinaison différente des caractéristiques détaillées ci-dessus, ou par substitution d'équivalents techniques, sans sortir pour autant du domaine de protection de l'invention.

## Revendications

1. Procédé de simulation (100) de présence pour un local, comprenant, d'une part, une étape consistant essentiellement à piloter (101) au moins un appareil électrique, en enchaînant des scènes simulant son actionnement par un utilisateur et s'étalant chacune sur une période de temps, l'enchaînement des scènes se répétant préférentiellement de façon cyclique, et, d'autre part, une étape préalable consistant essentiellement à paramétrer (102) les scènes, lors de laquelle l'état souhaité de l'au moins un appareil électrique piloté est défini pour chaque période de temps successive,
procédé **caractérisé en ce que** l'étape préalable comprend, en outre, deux étapes utiles pour paramétrer (102), à savoir, d'une part, comptabiliser (103) des détections de présence et/ou mouvement dans au moins une zone du local pour chaque période de temps, en quantifiant un indice de détection, et, d'autre part, décider (104) de l'état du au moins un appareil pour chaque période de temps en tenant compte des indices de détection calculés, et en outre, une étape consistant essentiellement à rafraîchir (105) le décompte des détections, lors de laquelle l'indice de détection pour au moins une période de temps est diminué.

2. Procédé (100) selon la revendication 1, **caractérisé en ce que** rafraîchir (105) consiste essentiellement à diviser de façon homogène les différents indices de détection.

3. Procédé (100) selon l'une quelconque des revendications 1 ou 2, **caractérisé en ce que**
comptabiliser (103) est effectué en permanence, à savoir tant que le pilotage (101) n'est pas en cours, rafraîchir (105) étant effectué à des instants choisis.

4. Procédé (100) selon l'une quelconque des revendications 1 à 3, **caractérisé en ce que**
rafraîchir (105) se fait lorsque la valeur de l'indice de détection pour l'une des périodes de temps a atteint un seuil.

5. Procédé (100) selon la revendication 4, **caractérisé en ce que** le seuil déclenchant le rafraîchissement (105) dépend des capacités de mémorisation d'une mémoire (5) dans laquelle sont enregistrés et codés les indices de détection.

6. Dispositif luminaire (1), mettant en oeuvre le procédé selon l'une quelconque des revendications 1 à 5, comprenant une source de lumière (2), un détecteur (3) de mouvement et/ou présence, une unité de traitement (4) numérique, un commutateur (6) piloté pour mettre en marche la source de lumière (2) en cas de détection, **caractérisé en ce que**
il comprend, en outre, une mémoire (5), dans laquelle sont mémorisés un programme de simulation de présence ainsi que des indices de détection pour différentes périodes de temps.

7. Dispositif luminaire (1) selon la revendication 6, **caractérisé en ce que**
il comprend un récepteur de signal (7), pour recevoir une instruction d'exécution de l'étape de pilotage (101) d'un programme de simulation de présence.

8. Dispositif luminaire (1) selon la revendication 7, **caractérisé en ce que** le récepteur de signal (7) est une borne de connexion filaire à un réseau domotique.

9. Dispositif luminaire (1) selon la revendication 7, **caractérisé en ce que** le récepteur de signal (7) est une borne de réception sans fil, en particulier le détecteur (3) de présence et/ou mouvements lui-même.

10. Dispositif luminaire (1) selon l'une quelconque des revendications 6 à 9, **caractérisé en ce que** il prend la forme d'un appareillage électrique pour montage encastré dans un mur, du type spot encastré à détection, la simulation de présence associée étant ainsi paramétrée en fonction de la détection de mouvement et/ou présence directement dans l'environnement de la source de lumière.

## Patentansprüche

1. Verfahren zur Anwesenheitssimulation (100) für einen Raum, aufweisend einerseits einen Schritt, der im Wesentlichen darin besteht, mindestens ein elektrisches Gerät zu steuern (101), indem Szenen aneinander gereiht werden, die sein Betätigen durch einen Benutzer simulieren und sich jeweils über einen Zeitraum erstrecken, wobei das Aneinanderreihen der Szenen vorzugsweise zyklisch wiederholt wird, und andererseits einen vorhergehenden Schritt, der im Wesentlichen darin besteht, die Szenen zu parametrieren (102), während welcher der gewünschte Zustand des mindestens einen gesteuerten elektrischen Geräts für jeden aufeinanderfolgenden Zeitraum definiert wird, Verfahren, das **dadurch gekennzeichnet ist, dass**
der vorhergehende Schritt ferner zwei Schritte (102), die zum Parametrieren nützlich sind, und zwar einerseits, um die Anwesenheits- und/oder Bewegungserfassungen in mindestens einem Bereich des Raums für jeden Zeitraum zu erfassen (103), indem ein Erfassungsindex quantifiziert wird, und andererseits, um über einen Zustand von mindestens einem Gerät für jeden Zeitraum zu entscheiden (104), indem die berechneten Erfassungsindexe berücksichtigt werden, und ferner einen Schritt aufweist, der im Wesentlichen darin besteht, die Zählung der Erfassungen zu aktualisieren (105), in welchem der Erfassungsindex für mindestens einen Zeitraum verringert wird.

2. Verfahren (100) nach Anspruch 1,
**dadurch gekennzeichnet, dass**
das Aktualisieren (105) im Wesentlichen darin besteht, die verschiedenen Erfassungsindexe homogen aufzuteilen.

3. Verfahren (100) nach einem der Ansprüche 1 oder 2,
**dadurch gekennzeichnet, dass**:
das Erfassen (103) kontinuierlich durchgeführt wird, und zwar, solange das Steuern (101) nicht im Gange ist, wobei das Aktualisieren (105) zu ausgewählten Zeitpunkten durchgeführt wird.

4. Verfahren (100) nach einem der Ansprüche 1 bis 3,
**dadurch gekennzeichnet, dass**:
das Aktualisieren (105) durchgeführt wird, wenn der Wert des Erfassungsindexes für einen dieser Zeiträume einen Schwellenwert erreicht hat.

5. Verfahren (100) nach Anspruch 4,
**dadurch gekennzeichnet, dass**
der Schwellenwert, der das Aktualisieren (105) auslöst, von den Speicherkapazitäten eines Speichers (5) abhängt, in welchem die Erfassungsindexe aufgezeichnet und codiert werden.

6. Beleuchtungsvorrichtung (1), die das Verfahren nach einem der Ansprüche 1 bis 5 umsetzt, umfassend eine Lichtquelle (2), einen Bewegungs- und/oder Anwesenheitsmelder (3), eine digitale Verarbeitungseinheit (4), einen Wahlschalter (6), der gesteuert wird, um die Lichtquelle (2) bei Erfassen einzuschalten,
**dadurch gekennzeichnet, dass**
sie ferner einen Speicher (5) aufweist, in dem ein Anwesenheitssimulationsprogramm und Erfassungsindexe für die verschiedenen Zeiträume gespeichert sind.

7. Beleuchtungsvorrichtung (1) nach Anspruch 6,
**dadurch gekennzeichnet, dass**
sie einen Signalempfänger (7) aufweist, um einen Ausführungsbefehl des Schrittes des Steuerns (101) eines Anwesenheitssimulationsprogramms zu empfangen.

8. Beleuchtungsvorrichtung (1) nach Anspruch 7,
**dadurch gekennzeichnet, dass**
der Signalempfänger (7) ein Kabelanschluss an ein Heimnetzwerk ist.

9. Beleuchtungsvorrichtung (1) nach Anspruch 7,
**dadurch gekennzeichnet, dass**
der Signalempfänger (7) drahtloser Empfänger, insbesondere der Bewegungs- und/oder Anwesenheitsmelder (3) selbst, ist.

10. Beleuchtungsvorrichtung (1) nach einem der Ansprüche 6 bis 9,
**dadurch gekennzeichnet, dass**
sie die Form eines elektrischen Gerätes zur Unterputzmontage in einer Wand, vom Typ Detektionseinbaustrahler, annimmt, wobei die verbundene Anwesenheitssimulation somit in Abhängigkeit von der Bewegungs- und/oder Anwesenheitserfassung direkt in der Umgebung der Lichtquelle parametriert wird.

## Claims

1. Method for simulating (100) presence for a room, comprising, on the one hand, a step essentially consisting in driving (101) at least one electrical apparatus, by sequencing scenes simulating the actuation thereof by a user and spreading each over a time period, the sequencing of the scenes being repeated preferentially cyclically, and, on the other hand, a preliminary step essentially consisting in parameterizing (102) the scenes, in which the desired state of the at least one driven electrical apparatus is defined for each successive time period,
method **characterized in that**
the preliminary step further comprises two useful steps for parameterizing (102), namely, on the one hand, recording (103) detections of presence and/or motion in at least one zone of the room for each time period, by quantifying a detection index, and, on the other hand, deciding (104) the state of the at least one apparatus for each time period by taking into account the computed detection indices and, furthermore, a step essentially consisting in refreshing (105) the record of the detections, in which the detection index for at least one time period is decreased.

2. Method (100) according to Claim 1, **characterized in that** refreshing (105) essentially consists in uniformly dividing up the different detection indices.

3. Method (100) according to either one of Claims 1 or 2, **characterized in that**
recording (103) is performed permanently, namely as long as the driving (101) is not in progress, refreshing (105) being performed at chosen instants.

4. Method (100) according to any one of Claims 1 to 3, **characterized in that**
refreshing (105) is done when the value of the detection index for one of the time periods has reached a threshold.

5. Method (100) according to Claim 4, **characterized in that** the threshold triggering the refreshing (105) depends on the storage capacities of a memory (5) in which the detection indices are stored and coded.

6. Lighting device (1), implementing the method according to any one of Claims 1 to 5, comprising a light source (2), a motion and/or presence detector (3), a digital processing unit (4), and a controlled switch (6) for switching on the light source (2) in case of detection, **characterized in that**
it further comprises a memory (5), in which are stored a presence simulation program and detection indices for different time periods.

7. Lighting device (1) according to Claim 6, **characterized in that**
it comprises a signal receiver (7), for receiving an instruction to execute the driving step (101) of a presence simulation program.

8. Lighting device (1) according to Claim 7, **characterized in that** the signal receiver (7) is a terminal for wired connection to a home automation network.

9. Lighting device (1) according to Claim 7, **characterized in that** the signal receiver (7) is a wireless reception terminal, in particular the presence and/or motion detector (3) itself.

10. Lighting device (1) according to any one of Claims 6 to 9, **characterized in that** it takes the form of an electrical equipment item for flush-mounting in a wall, of the flush-mounted spotlight with detection type, the associated presence simulation being thus parameterized as a function of the detection of motion and/or presence directly in the environment of the light source.
